# EUROPEAN PATENT APPLICATION

(11) **EP 2 133 782 A1**
(43) Date of publication of application: **16.12.2009**
(21) Application number: 09004837.2
(22) Date of filing: 01.04.2009
(51) Int. Cl.: G06F 3/048

(54) **Wireless control device and multi-cursor control method**

(30) Priority: 13.06.2008 TW 97122222
(71) Applicant: Avermedia Information, Inc., Chung Ho Taipei 235 (TW)
(72) Inventor: Yen, Christopher, Taipei 235 (TW); Wu, Jiun-Shin, Taipei 235 (TW); Lee, Tzung-Lin, Taipei 235 (TW); Sun, Shi-Mu, Taipei 235 (TW)
(74) Representative: Winkler, Andreas Fritz Ernst

(57) **Abstract**

A wireless control device and a multi-cursor control method for use with a computer system (2) are provided. The application program (20) of the computer system (2) is executed to generate at least a first pointer (211) and a second pointer (212). The wireless control device includes a first pointer controller (31), a second pointer controller (32) and a wireless transceiver (33). The multi-cursor control method includes steps of issuing a first wireless control signal containing a first identification code in response to manipulation of a first user, issuing a second wireless control signal containing a second identification code in response to manipulation of a second user, receiving and transmitting the first wireless control signal and the second wireless control signal to the computer system (2), and controlling corresponding shifts of the first pointer (211) and the second pointer (212) defined in the application program (20) according to the first identification code and the second identification code, respectively.

## Description

The present invention relates to a wireless control device and a multi-cursor control method, and more particularly to a wireless control device and a multi-cursor control method for use with a computer system.

Human-machine interface input devices are essential components of various electronic information products such as personal computers. In the early stage, the customarily used human-machine interface input devices include for example keyboards, trackballs, mice, touch pads, and so on. For helping the user well operate the computer system, the human-machine interface input devices are continuously developed in views of intuitive, easy-to-use and swift operations. Recently, a presenter is an exemplary human-machine interface input device complying with these requirements.

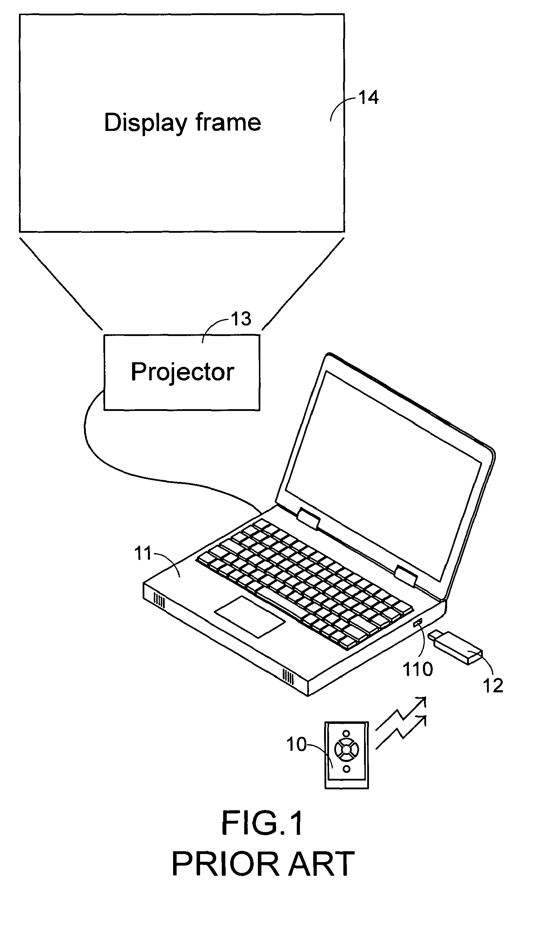

FIG. 1 is a schematic functional block illustrating collective operations of a conventional presenter and a personal computer. According to a command inputted into the presenter 10 by a user, the presenter 10 issues a wireless control signal to a wireless transceiver 12, which is connected to a connecting port 110 of the personal computer 11. According to the wireless control signal, the personal computer 11 is controlled to generate a display frame 14 through a projector 13. Generally, the conventional presenter is fabricated according to the concepts of designing a wireless mouse so as to simply execute a page-switching function or a cursor control function of the personal computer 11. In other words, the conventional presenter is suitable for unilateral control by the lecturer while making a presentation. It is still not feasible for the attendants to have discussions by using the conventional presenter.

Therefore, there is a need of providing improved wireless control device and multi-cursor control method to obviate the drawbacks encountered from the prior art.

The present invention provides a wireless control device for use with a computer system. The application program of the computer system is executed to generate at least a first pointer and a second pointer. The wireless control device includes a first pointer controller, a second pointer controller and a wireless transceiver. The first pointer controller has a built-in first identification code and issues a first wireless control signal containing the first identification code in response to manipulation of a first user. The second pointer controller has a built-in second identification code and issues a second wireless control signal containing the second identification code in response to manipulation of a second user. The wireless transceiver is electrically connected to the computer system for receiving the first wireless control signal issued by the first pointer controller and the second wireless control signal issued by the second pointer controller and transmitting the first wireless control signal and the second wireless control signal to the computer system. According to the first identification code contained in the first wireless control signal and the second identification code contained in the second wireless control signal control, corresponding shifts of the first pointer and the second pointer defined in the application program are controlled.

In an embodiment of the wireless control device, the first pointer and the second pointer are a first cursor and a second cursor, respectively.

In an embodiment of the wireless control device, the first pointer and the second pointer are a first paintbrush and a second paintbrush, respectively.

In an embodiment of the wireless control device, each of the first pointer controller and the second pointer controller includes a mouse optical sensor, an input button module, a microcontroller and a wireless receiving and transmitting module. In response to a motion of the wireless control device on a working plane, the mouse optical sensor generates a two-dimensional coordinate signal. In response to a depressing action by the user, the input button module generates a button command signal. The microcontroller is electrically connected to the mouse optical sensor and the input button module for receiving the two-dimensional coordinate signal and the button command signal and generating a data packet. The data packet is a combination of the two-dimensional coordinate signal, the button command signal and a corresponding identification code of the pointer controller. The wireless receiving and transmitting module is electrically connected to the microcontroller for receiving the data packet and converting the data packet into a corresponding wireless control signal to be issued to the wireless receiver.

In an embodiment of the wireless control device, each of the first pointer controller and the second pointer controller further includes a gyroscope module electrically connected to the microcontroller for issuing an inertia change signal to the microcontroller in response to a motion of the wireless control device in a three-dimensional space.

In an embodiment of the wireless control device, the wireless transceiver includes a wireless receiving and transmitting module and an external bus controller. The wireless receiving and transmitting module is used for receiving the wireless control signals issued by the pointer controllers and converting the wireless control signals into corresponding control instruction digital data. The external bus controller is electrically connected to the wireless receiving and transmitting module for controlling the computer system to create the same number of device descriptors as the number of pointer controllers. The device descriptors are communicated with the application program. The control instruction digital data are transmitted to respective device descriptors according to the identification codes contained in respective wireless control signals, thereby controlling shifts of respective pointers.

In an embodiment of the wireless control device, the device descriptors are human interface device descriptors defined by Microsoft Windows operating system or other device descriptors defined by a selected operating system, and used as communication protocols between the firmware of the external bus controller and the operating system driver.

In an embodiment of the wireless control device, the computer system and a liquid crystal projector or a document camera are integrated into a presentation system.

The present invention also provides a multi-cursor control method for use with a computer system. An application program of the computer system is executed to generate at least a first pointer and a second pointer. The multi-cursor control method includes steps of issuing a first wireless control signal containing a first identification code in response to manipulation of a first user, issuing a second wireless control signal containing a second identification code in response to manipulation of a second user, receiving and transmitting the first wireless control signal and the second wireless control signal to the computer system, and controlling corresponding shifts of the first pointer and the second pointer defined in the application program according to the first identification code contained in the first wireless control signal and the second identification code contained in the second wireless control signal control, respectively.

In an embodiment of the multi-cursor control method, the first pointer and the second pointer are a first cursor and a second cursor, respectively.

In an embodiment of the multi-cursor control method, the first pointer and the second pointer are a first paintbrush and a second paintbrush, respectively.

In an embodiment of the multi-cursor control method, the step of controlling corresponding shifts of the first pointer and the second pointer defined in the application program according to the first identification code and the second identification code includes sub-steps of receiving the wireless control signals issued by the pointer controllers and converting the wireless control signals into corresponding control instruction digital data, and controlling the computer system to create the same number of device descriptors as the number of pointer controllers. The device descriptors are communicated with the application program. The control instruction digital data are transmitted to respective device descriptors according to the identification codes contained in respective wireless control signals, thereby controlling shifts of respective pointers.

In an embodiment of the multi-cursor control method, the device descriptors are human interface device descriptors defined by Microsoft Windows operating system or other device descriptors defined by a selected operating system, and used as communication protocols between the firmware of the external bus controller and the operating system driver.

In an embodiment of the multi-cursor control method, the computer system and a liquid crystal projector or a document camera are integrated into a presentation system.

The above contents of the present invention will become more readily apparent to those ordinarily skilled in the art after reviewing the following detailed description and accompanying drawings, in which:
FIG. 1 is a schematic functional block illustrating collective operations of a conventional presenter and a personal computer;
FIG. 2 is a schematic functional block diagram illustrating a wireless control device according to a preferred embodiment of the present invention;
FIG. 3 is a schematic functional block diagram illustrating the internal components of one pointer controller of the present invention;
FIG. 4 is a schematic functional block diagram illustrating the internal components of the wireless transceiver shown in FIG. 2; and
FIG. 5 is a flowchart illustrating a method of connecting a pointer controller with the computer system.

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

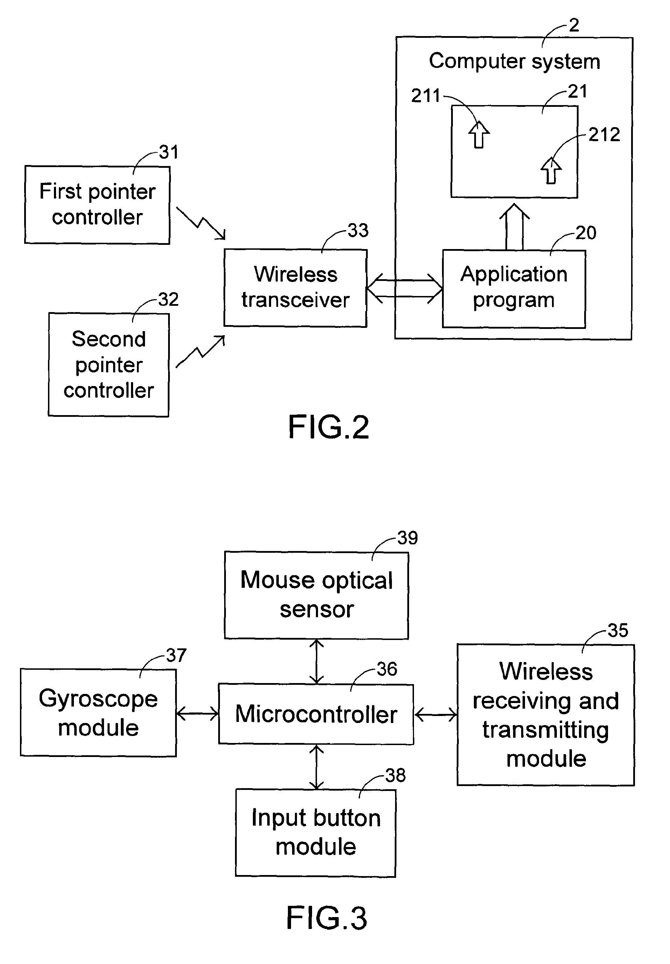

The present invention provides a wireless control device in order to obviate the drawbacks encountered from the prior art. FIG. 2 is a schematic functional block diagram illustrating a wireless control device according to a preferred embodiment of the present invention. The wireless control device is applied to a computer system 2. In the computer system 2, an application program 20 is executed such that a first pointer 211 and a second pointer 212 are shown on a screen 21 of the computer system 2. Examples of the pointers include but are not limited to cursors or paintbrushes. The wireless control device comprises multiple pointer controllers and a single wireless transceiver. Hereinafter, two pointer controllers are illustrated in the drawings for clarification.

As shown in FIG. 2, the wireless control device comprises a first pointer controller 31, a second pointer controller 32 and a wireless transceiver 33. The first pointer controller 31 has a built-in first identification code. In response to manipulation of a first user, the first pointer controller 31 issues a first wireless control signal containing the first identification code. The second pointer controller 32 has a built-in second identification code. In response to manipulation of a second user, the second pointer controller 32 issues a second wireless control signal containing the second identification code. The first wireless control signal and the second wireless control signal are received by the wireless transceiver 33. The wireless transceiver 33 is electrically connected to the computer system 2 through an external bus, e.g. a universal serial bus. When the first wireless control signal issued by the first pointer controller 31 and the second wireless control signal issued by the second pointer controller 32 are received by the wireless transceiver 33 and transmitted to the computer system 2, the first identification code contained in the first wireless control signal and the second identification code contained in the second wireless control signal will control corresponding shifts of the first pointer 211 and the second pointer 212, respectively.

FIG. 3 is a schematic functional block diagram illustrating the internal components of one pointer controller of the present invention. The pointer controller principally comprises a mouse optical sensor 39, an input button module 38, a gyroscope module 37, a microcontroller 36 and a wireless receiving and transmitting module 35. In response to a motion of the wireless control device on a working plane, the mouse optical sensor 39 issues a corresponding two-dimensional coordinate signal. In response to a depressing action by the user, the input button module 38 generates a button command signal. In response to a motion of the wireless control device in a three-dimensional space, the gyroscope module 37 generates an inertia change signal. The microcontroller 36 is electrically connected to the mouse optical sensor 39, the input button module 38 and the gyroscope module 37. After the two-dimensional coordinate signal, the button command signal and the inertia change signal are received by the microcontroller 36, the two-dimensional coordinate signal, the button command signal, the inertia change signal and the built-in identification code of the pointer controller are combined as a data packet. The data packet is then transmitted to the wireless receiving and transmitting module 35 and converted into a corresponding wireless control signal by the wireless receiving and transmitting module 35. The wireless control signal is transmitted to the wireless transceiver 33 in a wireless transmission manner.

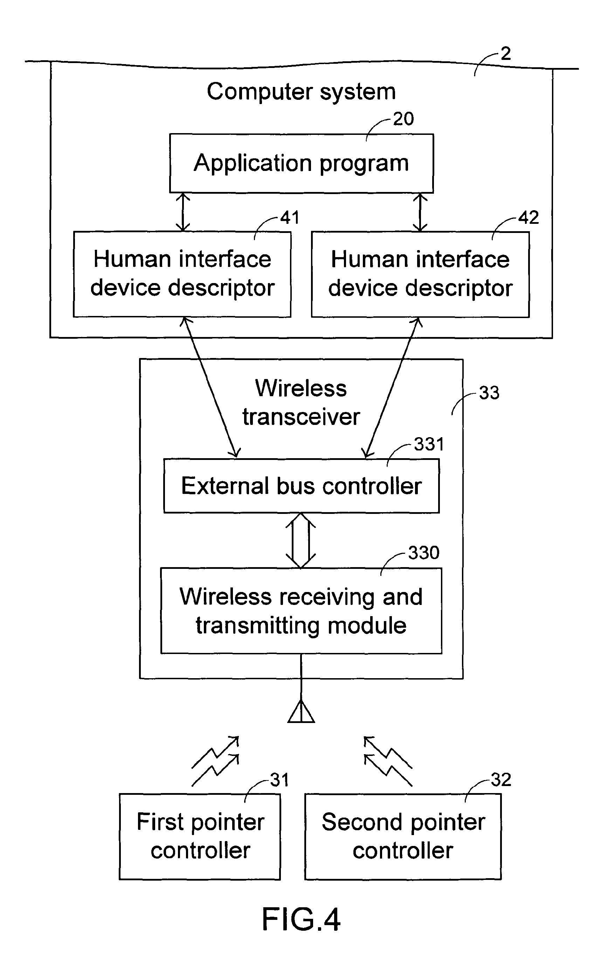

FIG. 4 is a schematic functional block diagram illustrating the internal components of the wireless transceiver 33 shown in FIG. 2. As shown in FIG. 4, the wireless transceiver 33 comprises a wireless receiving and transmitting module 330 and an external bus controller 331. The wireless receiving and transmitting module 330 may receive the wireless control signals issued by the pointer controllers 31 and 32 and convert the wireless control signals into control instruction digital data. An exemplary external bus controller 331 is a universal serial bus controller. The external bus controller 331 may successively transfer data to the application program 20 by sorting. Furthermore, the first pointer 211 and the second pointer 212 shown on the screen 21 are controlled in a time division multiplex access (TDMA) manner and according to the sequence of event. Since the data transmission speed is very high, the user may feel that the data are simultaneously inputted. The external bus controller 331 may control the computer system 2 to create the same number of human interface device (HID) descriptors as the number of pointer controllers. For example, two HID descriptors 41 and 42 corresponding to the pointer controllers 31 and 32 are respectively created. The HID descriptors 41 and 42 are communicated with the application program 20. According to the identification codes contained in respective wireless control signals, corresponding control instruction digital data are transmitted to the HID descriptors 41 and 42 under control of the external bus controller 331, thereby inputting corresponding button instructions. In some embodiment, the HID descriptors conform to the general specifications defined by Microsoft Windows operating system and are used as communication protocols between the firmware of the external bus controller 331 and the operating system driver. In a case that the computer system is operated under a different operating system, the specifications of the HID descriptors are varied to comply with the operating system so as to be used as communication protocols between the firmware of the external bus controller and the operating system driver.

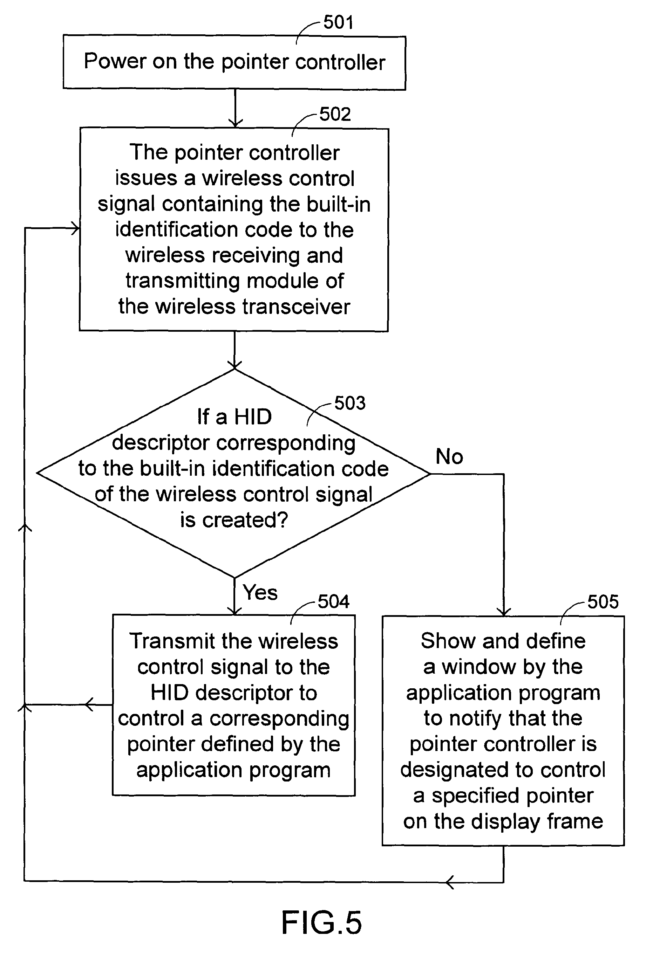

FIG. 5 is a flowchart illustrating a method of connecting a pointer controller with the computer system. After the pointer controller is powered on (Step 501), the pointer controller issues a wireless control signal containing the built-in identification code to the wireless receiving and transmitting module 330 of the wireless transceiver 33 (Step 502). Next, the external bus controller 331 of the wireless transceiver 33 discriminates whether a HID descriptor corresponding to the built-in identification code of the wireless control signal is created (Step 503). If the HID descriptor is created, the wireless control signal is transmitted to the HID descriptor to control a corresponding pointer defined by the application program (Step 504). Whereas, if the HID descriptor has not been created, a window is shown and defined by the application program to notify that the pointer controller is designated to control a specified pointer on the display frame (Step 504).

Moreover, the electronic whiteboard may be defined by the application program. The electronic whiteboard is shown on the computer screen or projected on a projection screen through a projector. The multiple pointer controllers of the wireless control device of the present invention are responsible for controlling respective pointers shown on the electronic whiteboard. When making a presentation, holding a meeting or giving a lecture, the attendants may handwrite, discuss, vote or answer question on the electronic whiteboard in order to implement an opinion feedback function. After the opinion feedback function is activated, the wireless receiving and transmitting module 330 of the wireless transceiver 33 continuously issues waiting signals and receives opinion feedback signals from the pointer controllers. The opinion feedback signals are transmitted to the computer system so as to collect and manage the opinions and comments. In addition, the application program can realize which opinion controllers have responded, and terminate receiving the opinion feedback signals at any time.

From the above description, the wireless control device and the multi-cursor control method of the present invention is capable of obviating the drawbacks encountered from the prior art. In the above embodiment, the wireless control device and the multi-cursor control method are used with a computer system. Nevertheless, the wireless control device and the multi-cursor control method can be used with any presentation system with a liquid crystal projector or a document camera in order to implement the opinion feedback function.

While the invention has been described in terms of what is presently considered to be the most practical and preferred embodiments, it is to be understood that the invention needs not to be limited to the disclosed embodiment. On the contrary, it is intended to cover various modifications and similar arrangements included within the spirit and scope of the appended claims which are to be accorded with the broadest interpretation so as to encompass all such modifications and similar structures.

The features disclosed in the foregoing description, in the claims and/or in the accompanying drawings may, both separately and in any combination thereof, be material for realizing the invention in diverse forms thereof.

## Claims

1. A wireless control device for use with a computer system (2), an application program (20) of the computer system (2) being executed to generate at least a first pointer (211) and a second pointer (212), **characterized in that** the wireless control device comprises:
a first pointer controller (31) having a built-in first identification code and issuing a first wireless control signal containing the first identification code in response to manipulation of a first user;
a second pointer controller (32) having a built-in second identification code and issuing a second wireless control signal containing the second identification code in response to manipulation of a second user; and
a wireless transceiver (33) electrically connected to the computer system (2) for receiving the first wireless control signal issued by the first pointer controller (31) and the second wireless control signal issued by the second pointer controller (32) and transmitting the first wireless control signal and the second wireless control signal to the computer system (2), wherein corresponding shifts of the first pointer (211) and the second pointer (212) defined in the application program (20) are controlled according to the first identification code contained in the first wireless control signal and the second identification code contained in the second wireless control signal control, respectively.

2. The wireless control device according to claim 1, **characterized in that** the first pointer (211) and the second pointer (212) are a first cursor and a second cursor, respectively.

3. The wireless control device according to claim 1, **characterized in that** the first pointer (211) and the second pointer (212) are a first paintbrush and a second paintbrush, respectively.

4. The wireless control device according to claim 1, **characterized in that** each of the first pointer controller (31) and the second pointer controller (32) comprises:
a mouse optical sensor (39) for generating a two-dimensional coordinate signal in response to a motion of the wireless control device on a working plane;
an input button module (38) for generating a button command signal in response to a depressing action by the user;
a microcontroller (36) electrically connected to the mouse optical sensor (39) and the input button module (38) for receiving the two-dimensional coordinate signal and the button command signal and generating a data packet, wherein the data packet is a combination of the two-dimensional coordinate signal, the button command signal and a corresponding identification code of the pointer controller (31; 32); and
a wireless receiving and transmitting module (35) electrically connected to the microcontroller (36) for receiving the data packet and converting the data packet into a corresponding wireless control signal to be issued to the wireless receiver (33).

5. The wireless control device according to claim 4, **characterized in that** each of the first pointer controller (31) and the second pointer controller (32) further comprises a gyroscope module (37) electrically connected to the microcontroller (36) for issuing an inertia change signal to the microcontroller (36) in response to a motion of the wireless control device in a three-dimensional space.

6. The wireless control device according to claim 1, **characterized in that** the wireless transceiver (33) comprises:
a wireless receiving and transmitting module (330) for receiving the wireless control signals issued by the pointer controllers (31; 32) and converting the wireless control signals into corresponding control instruction digital data; and
an external bus controller (331) electrically connected to the wireless receiving and transmitting module (330) for controlling the computer system (2) to create the same number of device descriptors as the number of pointer controllers (31; 32), wherein the device descriptors are communicated with the application program (20), and the control instruction digital data are transmitted to respective device descriptors according to the identification codes contained in respective wireless control signals, thereby controlling shifts of respective pointers (211; 212).

7. The wireless control device according to claim 6, **characterized in that** the device descriptors are human interface device descriptors (41; 42) defined by Microsoft Windows operating system or other device descriptors defined by a selected operating system, and used as communication protocols between the firmware of the external bus controller (331) and the operating system driver.

8. The wireless control device according to claim 1, **characterized in that** the computer system (2) and a liquid crystal projector or a document camera are integrated into a presentation system.

9. A multi-cursor control method for use with a computer system (2), an application program (20) of the computer system (2) being executed to generate at least a first pointer (211) and a second pointer (212), **characterized in that** the multi-cursor control method comprises steps of:
issuing a first wireless control signal containing a first identification code in response to manipulation of a first user;
issuing a second wireless control signal containing a second identification code in response to manipulation of a second user; and
receiving and transmitting the first wireless control signal and the second wireless control signal to the computer system (2), and controlling corresponding shifts of the first pointer (211) and the second pointer (212) defined in the application program (20) according to the first identification code contained in the first wireless control signal and the second identification code contained in the second wireless control signal control, respectively.

10. The multi-cursor control method according to claim 9, **characterized in that** the first pointer (211) and the second pointer (212) are a first cursor and a second cursor, respectively.

11. The multi-cursor control method according to claim 9, **characterized in that** the first pointer (211) and the second pointer (212) are a first paintbrush and a second paintbrush, respectively.

12. The multi-cursor control method according to claim 9, **characterized in that** the step of controlling corresponding shifts of the first pointer (211) and the second pointer (212) defined in the application program (20) according to the first identification code and the second identification code includes sub-steps of:
receiving the wireless control signals issued by pointer controllers (31; 32) and converting the wireless control signals into corresponding control instruction digital data; and
controlling the computer system (2) to create the same number of device descriptors as the number of pointer controllers (31; 32), wherein the device descriptors are communicated with the application program (20), and the control instruction digital data are transmitted to respective device descriptors according to the identification codes contained in respective wireless control signals, thereby controlling shifts of respective pointers (211; 212).

13. The multi-cursor control method according to claim 12, **characterized in that** the device descriptors are human interface device descriptors (41; 42) defined by Microsoft Windows operating system or other device descriptors defined by a selected operating system, and used as communication protocols between a firmware of an external bus controller (331) and an operating system driver.

14. The multi-cursor control method according to claim 9, **characterized in that** the computer system (2) and a liquid crystal projector or a document camera are integrated into a presentation system.
